# EUROPEAN PATENT APPLICATION

(11) **EP 4 509 308 A1**
(43) Date of publication of application: **19.02.2025**
(21) Application number: 24189240.5
(22) Date of filing: 17.07.2024
(51) Int. Cl.: B32B 17/10, B32B 3/08

(54) **COMPOSITE GLAZING PROVIDED WITH SEGMENTS OF FLAT GLASS STRIPS**

(30) Priority: 14.08.2023 CN 202311020447
(71) Applicant: Inalfa Roof Systems Group B.V., 5807 GW Oostrum (NL)
(72) Inventor: NELLEN, Marcel Johan Christiaan, 5815 AR Merselo (NL); VAN DOLEWEERD, Theodorus, 6024 AK Budel-Dorplein (NL); DE BIE, Sander, 6361 XB Nuth (NL)
(74) Representative: De Vries & Metman

(57) **Abstract**

A glass panel assembly intended for use in a roof assembly of a vehicle, with a layered glass panel comprising a first glass panel with a first glass panel upper face and an opposite first glass panel lower face and a second glass panel with a second glass panel upper face and an opposite second glass panel lower face. The first glass panel and second glass panel, by means of a laminating layer, are laminated to each other at the first glass panel lower face and the second glass panel upper face. Light out-coupling provisions are placed between the laminating layer and the second glass panel. At least one light in-coupling assembly is provided on the second glass panel lower face. The light in-coupling assembly comprises a multitude of light sources and a multitude of light in-coupling elements, wherein the light in-coupling elements are rectangular prisms.

## Description

### TECHNICAL FIELD

The invention generally relates to glass panel assemblies intended for use in roof assemblies of vehicles. In particular the invention relates to such glass panel assemblies which are provided with at least one light in-coupling assembly. Such glass panel assemblies, among others, may be used for providing a patterned illumination of the interior of a passenger compartment of a vehicle.

### BACKGROUND

In existing glass panel assemblies on top of a basic layer of glass, an additional layer of glass is needed which, considered in a top plan view, is smaller than the basic layer of glass because a light in coupling is achieved from the sides of the glass and sufficient room should be provided for the positioning of light in-coupling assemblies. Such existing glass panel assemblies may comprise layered glass panels with two, or even three separate glass panels positioned on top of each other.

### SUMMARY

It is an object of the present invention to provide an improved glass panel assembly of such a type.

Thus, in accordance with a first aspect of the present invention, a glass panel assembly is provided which is intended for use in a roof assembly of a vehicle, with a layered glass panel comprising a first glass panel with a first glass panel upper face and an opposite first glass panel lower face and a second glass panel with a second glass panel upper face and an opposite second glass panel lower face, wherein the first glass panel and second glass panel by means of a laminating layer are laminated to each other at the first glass panel lower face and the second glass panel upper face, and wherein light out-coupling provisions are placed between the laminating layer and the second glass panel, at least one light in-coupling assembly is provided on the second glass panel lower face, wherein the light in-coupling assembly comprises a multitude of light sources and a multitude of light in-coupling elements and wherein the light in-coupling elements are rectangular prisms.

The glass panel assembly in accordance with the present invention combines a number of advantageous features, such as for example a low weight, high strength and very effective light in-coupling into the glass panel.

In one embodiment of the glass panel assembly each rectangular prism may be made of clear glass or ultra clear glass and wherein the rectangular prism is provided with an in-coupling surface receiving light from the nearby light source and a discharging surface emitting light out of the rectangular prism into the second glass panel. Preferably the rectangular prism is made of ultra clear glass, however it may be conceivable that for cost reasons clear glass is used. Since the prism is located close to the light source and the prism is relatively short compared to the length or width of the second glass panel, a clear glass could be sufficient to reach the light transmittance requirements. The light of the light source enters the in-coupling surface and is guided directly to the discharging surface and/or is reflected indirectly via an inner surface of the opposite wall of the discharging surface of the rectangular prism towards the discharge surface.

According to an aspect of the invention each of the rectangular prisms is connected with its discharging surface to the second glass panel lower face by means of a thin layer of an optic adhesive. The second glass panel lower face is free of surface treatments in the area where the multitude of rectangular prisms are connected to the lower face.

To be able to have a good physical as well as optical connection between the rectangular prism and the lower face of the second glass panel, a thin layer of optic adhesive is applied between the surfaces.

According to yet another aspect of the invention the at least one of the light in coupling assemblies extend along one or more of the lateral or transversal edge areas of the layered glass panel. The layered glass panel comprises a curvature along its length and along its width. Each of the rectangular prisms is a straight strip of glass material connected to a curved surface of the second glass panel lower face by means of the optic adhesive. The glass panel assembly may be equipped with light in-coupling assemblies. Typically, these light in-coupling assemblies are fixed by optic adhesive along the opposite lateral edges of the lower face of the second glass panel. However, the light in-couple assemblies may also be placed along the front and rear edges of the lower face of the second glass panel. Because these glass panel assemblies are intended for use in a roof assembly of a vehicle, such glass panel assemblies usually have curved surfaces. A prism made of glass may have to be prebended to make sure that the curvatures of the lower face of the second glass panel and the glass strip match together. Pre-bending of glass strips makes the strips expensive which is unfavorable. Using straight glass strips is unfavorable in case of long glass strips because of high stresses in the glass material when the strips adopt the curvature of the lower surface of the second glass panel. In case of shorter glass strips, it would be possible to glue the shorter strip in such a way to the lower face of the second glass panel that the shorter strip stays straight when fixed by optic adhesive. This shorter straight glass strip is glued without any pretension to the Glass panel assembly.

According to yet another aspect of the invention the multitude of rectangular prisms are connected to the second glass panel lower face, each prism adjacent to another and the prisms placed in a row. The adjacent rectangular prisms are laterally optically interconnected by means of the optic adhesive.

When using shorter straight glass strips, it is inevitable that an array of these is required to cover for instance a lateral side edge of the lower face of the second glass panel. It is advantageous to glue these rectangular glass strips adjacent to each other side by side to get a continuous row of glass strips. Each of the light sources, in the present invention these are LEDs, are placed on a PCB strip which extends along the array of rectangular prisms and are capable of emitting light into the in-coupling surface of the rectangular prisms. The LEDs emit their light under an angle of 120 degrees. To make sure that the light is not reflected by the inner lateral side surface of the rectangular prisms, the prisms are laterally interconnected by optic adhesive. This allows that part of the light of a LED is emitted through the neighboring rectangular prism. This is advantageous in relation to the evenness of the light pattern reflected into the interior of the vehicle.

According to yet another aspect of the invention the thickness t of the optic adhesive between the rectangular prism and the second glass panel lower face varies between a minimum value and a maximum value measured between points L and R. Because of the curved shape of the lower face of the second glass panel the distance between this surface and the straight rectangular prisms varies seen from a lateral left to an opposite lateral right side. In practice the curvature of the lower face is particularly large and as such the variation in the thickness t is small.

According to yet another aspect of the invention, the length L of the rectangular prism lies in a range of 20 mm to 100 mm and more particularly is 66 mm. The width W of the rectangular prism lies in a range of 10 mm to 20 mm and more particularly is 17 mm. The height H of the rectangular prism lies in the range of 1,6 mm and 2,5 mm and more particularly is 2,1 mm. And distance D is the distance between each neighboring LED which distance lies in a range of 10 mm to 50 mm and more particularly is 33 mm.

The ranges mentioned provide a good basis for the yield of light and the evenness of the light pattern into the interior of the vehicle. The particular values mentioned within the respective ranges provide an optimal result in yield of light and light pattern.

According to yet another aspect of the invention a PCB strip carrying a multitude of light sources extends along a light receiving edge of the multitude of rectangular prisms and wherein the PCB strip is either connected to the lower face of the second glass panel or is connected to a cover element which covers the light in coupling assembly. It is conceivable that the PCB strip is connected to the lower face of second glass panel which would be an easy and cheap way of construction. However, it is also conceivable that the PCB strip containing the array of LEDs is connected to the inside of a cover element covering the strip and the array of rectangular prisms.

Further details and advantages of the invention will become clear from the following description with reference to the drawings showing embodiments of the roof panel assembly according to the invention.
Fig. 1 is a schematic perspective view of a vehicle roof comprising the glass panel assembly according to the invention.
Fig. 2 is a plan view of the vehicle roof comprising the glass panel assembly according to the invention.
Fig. 3 is a perspective view of the lower face of the glass panel comprising the rectangular prisms and the PCB strip with the LEDs.
Fig. 4 is a section across the layered glass panel, the rectangular prisms and the PCB strip with the LEDs along line IV-IV in fig. 3 according to a first embodiment.
Fig. 5 is a plan view of the lower face of the glass panel with the rectangular prisms and the PCB strip with the LEDs.
Fig. 6 is a schematic sectional view indicating the rectangular prisms and the position of the LEDs in relation to the curved lower face of the second glass panel.

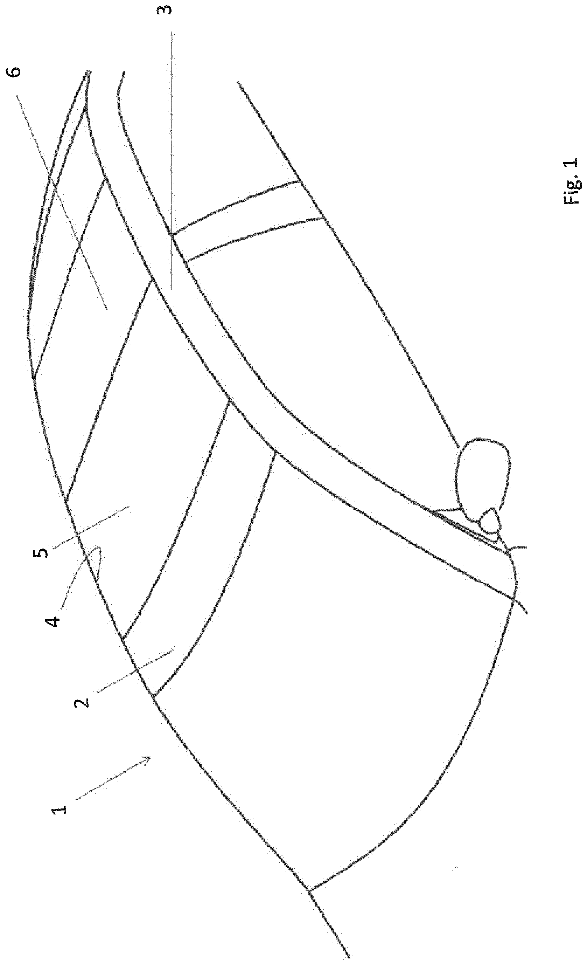

In figure 1, a top part of a vehicle 1 is represented which has a fixed roof part 2 to which a frame part 3 (only represented in figure 1) is mounted of which inner sides surround (or define) a roof opening 4. One part (for example forward part) of the roof opening 4 is covered by a movable panel 5, whereas the remaining part (for example rear part) of the roof opening 4 is covered by a fixed panel 6.

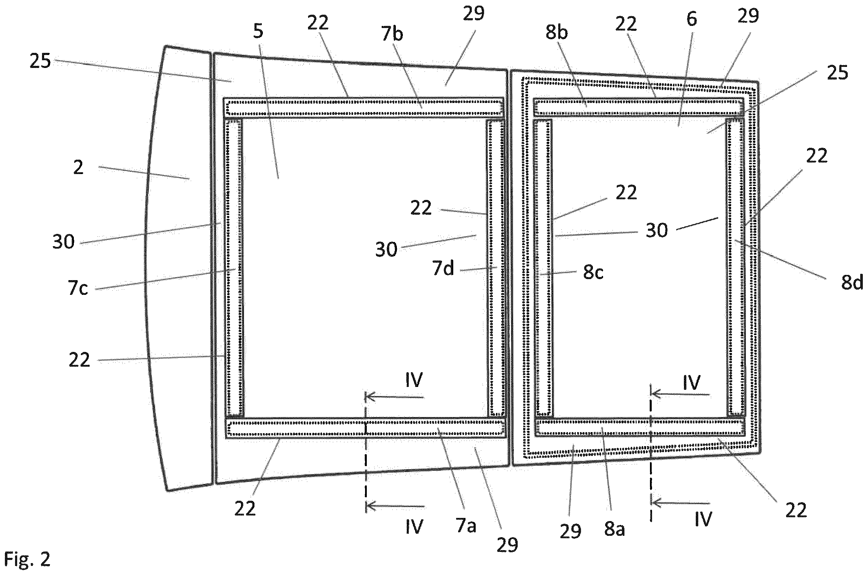

In figure 2 the movable panel 5 and fixed panel 6 are schematically represented in their respective positions relative to the fixed roof part 2. Of course, the movable panel 5 may move to another position (for example partly backwards over the fixed panel 6) for at least partly freeing the respective part of the roof opening 4. Mechanisms for achieving such a movement of the movable panel 5 are well-known in the art and thus not further described here. As an exemplary embodiment, both the movable panel 5 and the fixed panel 6 define layered glass panels 25 which are part of glass panel assemblies in accordance with the present invention and which will be described in detail. It should be noted, however, that in other embodiments also only one of the movable and fixed panels could define such a layered glass panel 25. In figure 2 light in-coupling assemblies 7a-d and 8a-d are indicated schematically in dotted lines. Such light in-coupling assemblies 7, 8 may be provided in any desired pattern (for example at all lateral and transverse edges of the panels 5, 6 as represented, or for example only at some of the edges, for example only at the lateral edges of the panels, thus only 7a, b and 8a, b, and in a similar manner for both panels or differently for both panels). Although, as schematically represented in figure 2, a location of the light in-coupling assemblies 7, 8 in the vicinity of the edges of the panels 5, 6 is preferable, also other locations may be conceived. Each of the light in-couplings assemblies 7, 8 may be covered by a cover element 22 which hides the rectangular prisms 17 and the PCB strip 31 with the light source 16 (i.e a LED) from view from the interior of vehicle 1.

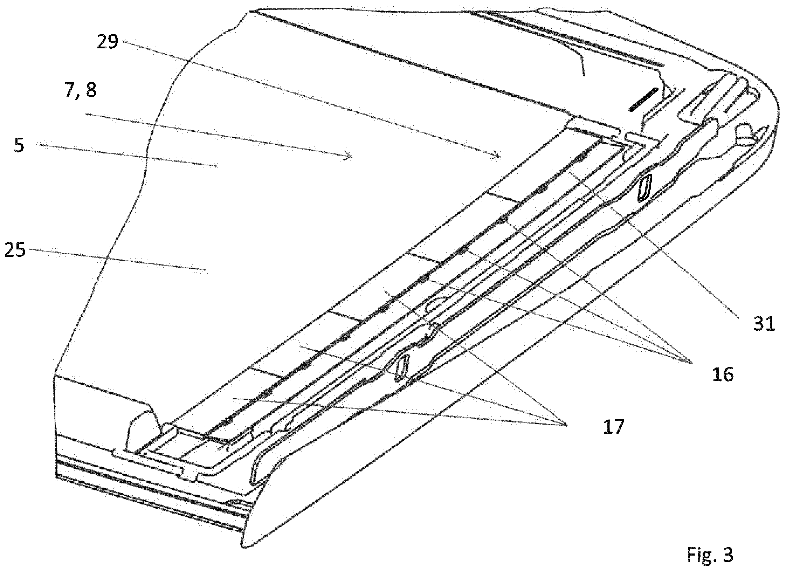

In fig. 3 layered glass panel 25 is shown viewing the lower face 11. In this embodiment a lateral edge area 29 is shown with the row of rectangular prisms 17, in this embodiment 5 prisms in a row. Adjacent to the row of rectangular prisms 17 a PCB strip 31 is placed with the light emitting side of the LEDs 16 pointing towards the in-coupling surface 27 of the prisms 17. Each of the in-coupling surfaces 27 of the prisms 17 in this embodiment, receives light of two LEDs 16 lined up adjacently. Depending on the radius of the inner face 14 of the second glass panel 12 and on the size of the layered glass panel 25 more or less rectangular prisms 17 may be used. For instance, if the radius of the lower face 14 is relatively small, a larger number of prisms 17 may be used. This has to do with the following. When the straight shaped rectangular prisms 17 during manufacturing are glued against the lower face 14 of the second glass panel 12 with optic adhesive 18 there will be a varying distance between the straight rectangular prism 17 and the curvature of the lower face 14 of the second glass panel 12 filled with optic adhesive 18, in the shape of a circle section. Nevertheless, this variation in distance may not be too big, since this could influence the evenness of the light out-coupling pattern from the layered glass panel 25 to the interior. As stated before, 2 LEDs 16 are used in relation to one rectangular prism 17. It may be conceivable to use less LEDs 16 per rectangular prism 17 or more than two, this depends on the length L of the prism 17 and the requirements for the light yield of the light pattern emitted into the interior of vehicle 1. The PCB strip 31 may be one elongated strip which is flexible and capable of being glued to the curved lower face 14 of the second glass panel 12, The flexibility of the PCB strip 31 allows a constant distance of the glue between the PCB strip 31 and the lower surface 14 of the second glass panel 12. The PCB strip 31 may be glued by the optic adhesive 18 or by another type of adhesive whichever may be a cheaper solution.

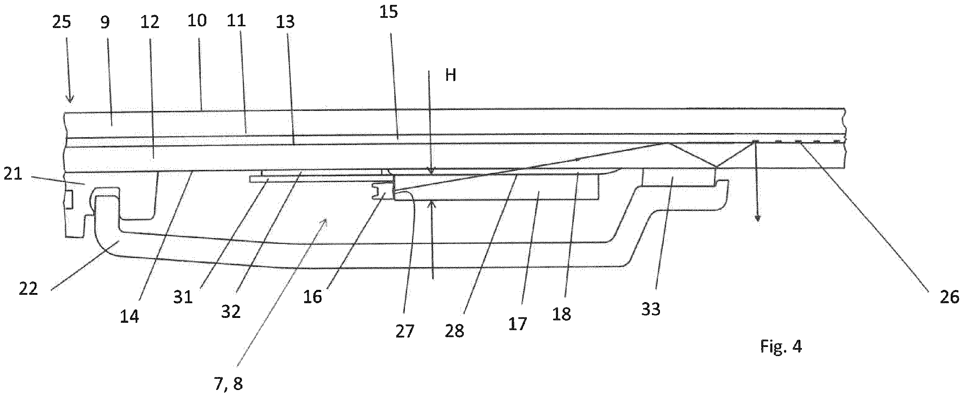

Fig. 4 shows a cross-sectional view showing the layered glass panel 25, the rectangular prism 17, the PCB strip 31, the LED 16 and also the cover element 22. This sectional view is taken along lines IV-IV in fig.2, which is a typical view of such section regardless of where the in-coupling assembly 7, 8 is placed along the lateral or transversal edge 29, 30 of the movable panel 5 or the fixed panel 6. The layered glass panel 25 is shown having at its second glass panel lower face 14 the rectangular prism 17 which is adhered to the lower face 14 by means of an optic adhesive 18. At the in-coupling surface 27 of the rectangular prism 17 a LED 16 is arranged which is capable of emitting light into the in-coupling surface 27 of the rectangular prism 17. The LED 16 is mounted on a PCB strip 31, which strip is connected to the lower face 14 by means of an adhesive member 32. The light emitted by the LED 16 enters the rectangular prism 17 and leaves the prism at the discharge surface 28 of the prism and enters via the Optic adhesive 18 into the body of the second glass panel 12. Light out-coupling provisions 26 are placed in between the second glass panel 12 and the laminating layer 15. Light that is guided in the inner body of the second glass panel 12 may be reflected at the light out-coupling provisions 26 and be emitted into the interior of vehicle 1. It is also conceivable that the light out-coupling provisions 26 are part of the laminating layer 15. Cover element 22 covers the light in-coupling assemblies 7, 8. Such cover element 22 is an elongated part that extends along an edge area of the layered glass panel 25. The cover element 22 is connected typically on one edge towards the lower face 14 of the second glass panel 12 by an adhering element 33. At an opposite end the cover element 22 may be connected to the lower face 14 of the second glass panel 12 by a similar adhering element. This may be the case when the layered glass panel 25 is equipped with a partial encapsulation whereby only the short side of the first and second glass panel 9, 12 and the laminating layer 15 are sealed by encapsulation material. In case the layered glass panel 25 is fully encapsulated whereby also encapsulation material is formed against the lower face 14 of the second glass panel 12 in the lateral and transversal edge areas 29, 30, the cover element 22 is fixed to the encapsulation material 21. The rectangular prism 17 may have a thickness H, as shown in fig. 4, which lies in the range of 1,6 mm and 2,5 mm and more particularly is 2,1 mm.

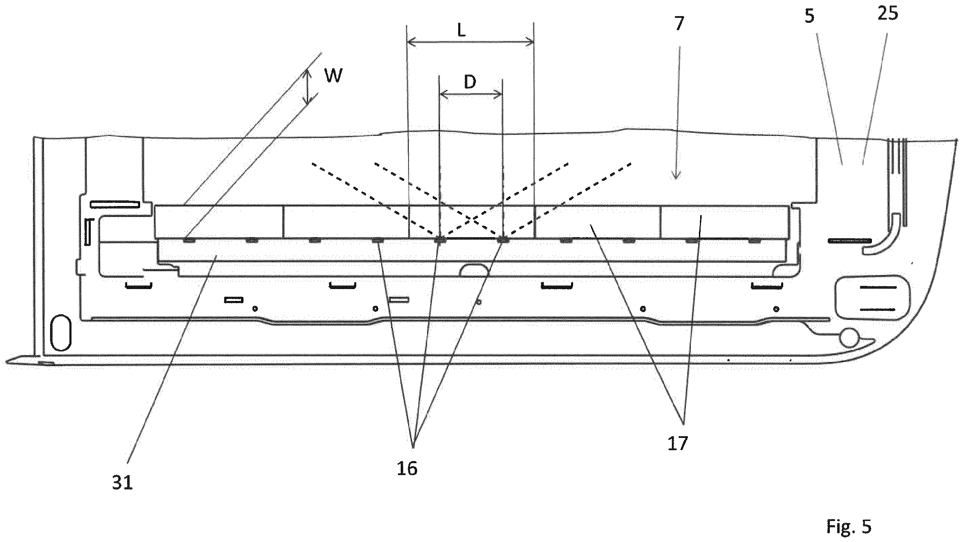

Fig. 5 shows a plan view of the light in-coupling assemblies 7, 8. As shown LEDs 16 emit light into the rectangular prisms 17. In this embodiment a row of 5 rectangular prisms 17 are connected to the lower face 14 of the second glass panel 12. Each of the rectangular prisms 17 receives light from 2 LEDs 16 in this embodiment. The light emitted into the rectangular prisms 17 seen in a plan view has a light pattern with an angle of 120 degrees. Due to the maximum length L of the rectangular prism 17 the prism will not be long enough to guide all of the light of the designated LEDs 16 to its discharging surface 28. Because of this, the light which is emitted by the LED 16 towards the extreme angles will be guided partly through the adjacent rectangular prism 17. To ensure that the light is not reflected at the walls inside of the rectangular prism 17, the adjacent rectangular prisms 17 are interconnected by means of optic adhesive 18, such that part of the light travels through the adjacent rectangular prism 17 via the optic adhesive 18 into the body of the second glass panel 12. The PCB strip 31 extends along the row of rectangular prisms 17 and has substantially the same length as the row of rectangular prisms 17. The length L of the rectangular prism (17) lies in a range of 20 mm to 100 mm and more particularly is 66 mm. The width W of the rectangular prism (17) lies in a range of 10 mm to 20 mm and more particularly is 17 mm. Distance D is shown which is the distance between each neighboring LED (16) which distance lies in a range of 10 mm to 50 mm and more particularly is 33 mm.

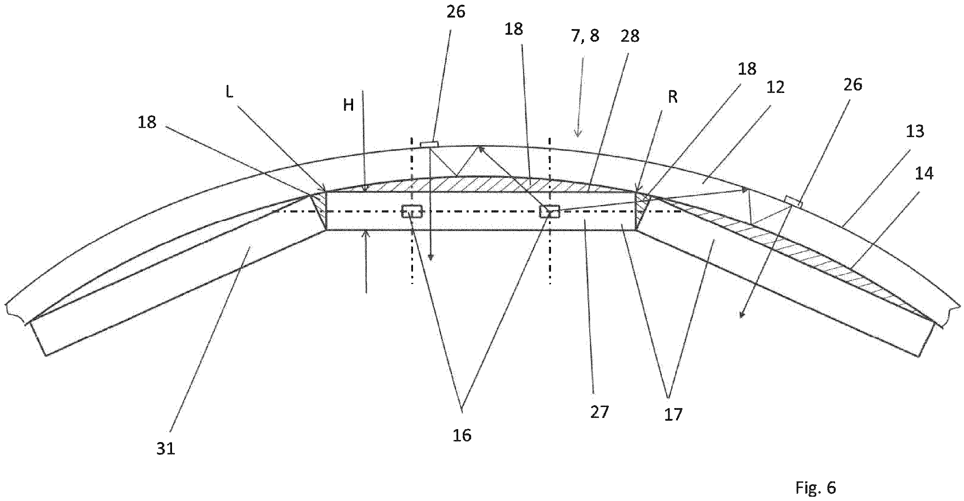

Fig. 6 shows an exaggerated schematic view of the second glass panel 12 and here 3 rectangular prisms 17. The view is a side view looking onto the short side of the second glass panel 12 and the light in-coupling surface 27. The middle one of these rectangular prisms 17 is drawn having two LEDs 16 emitting light into the in-coupling surface 27 of the rectangular prism 17. Light of the LED is emitted via the rectangular prism 17, optic adhesive 18 into the body of the second glass panel 12. Here it can be seen that the light not only passes through the optic adhesive 18 at the discharging surface 28 of the determined rectangular prism 17, but also via the optic adhesive 18 with which the neighboring rectangular prisms 17 are interconnected and via the neighboring rectangular prism 17 and its discharging surface 28. As such it is ensured that the light pattern emitted by the light out-coupling provisions 26 into the interior of vehicle 1 has an even appearance to the occupant.

The invention is not limited to the embodiments described which may be varied widely within the scope of the invention as defined by the appending claims.

## Claims

1. Glass panel assembly intended for use in a roof assembly of a vehicle (1), with a layered glass panel (25) comprising a first glass panel (9) with a first glass panel upper face (10) and an opposite first glass panel lower face (11), and a second glass panel (12) with a second glass panel upper face (13) and an opposite second glass panel lower face (14), wherein the first glass panel (9) and second glass panel (12), by means of a laminating layer (15), are laminated to each other at the first glass panel lower face (11) and the second glass panel upper face (14), and wherein light out-coupling provisions (26) are placed between the laminating layer (15) and the second glass panel (12), at least one light in-coupling assembly (7, 8) being provided on the second glass panel lower face (14),
**characterized in that** the light in-coupling assembly (7, 8) comprises a multitude of light sources (16) and a multitude of light in-coupling elements (17), wherein the light in-coupling elements are rectangular prisms (17).

2. Glass panel assembly according to claim 1, wherein each rectangular prism (17) is made of clear glass or ultra clear glass and wherein the rectangular prism 17 is provided with an in-coupling surface (27) receiving light from the nearby light source 16 and a discharging surface (28) emitting light out of the rectangular prism (17) into the second glass panel (12) .

3. Glass panel assembly according to claim 2, wherein each of the rectangular prisms (17) is connected with its discharging surface (28) to the second glass panel lower face (14) by means of a thin layer of an optic adhesive (18).

4. Glass panel assembly according to claim 1, wherein the layered glass panel (25) comprises a curvature along its length and along its width.

5. Glass panel assembly according to claim 1, wherein the at least one of the light in-coupling assemblies (7,8) extend along one or more of the lateral or transverse edge areas (29, 30) of the layered glass panel (25).

6. Glass panel assembly according to claim 3, wherein the multitude of rectangular prisms (17) are connected to the second glass panel lower face (14), each prism (17) adjacent to another and the prisms (17) are placed in a row.

7. Glass panel assembly according to claim 6, wherein each of the rectangular prisms (17) is a straight strip of glass material connected to a curved surface of the second glass panel lower face (14) by means of the optic adhesive (18).

8. Glass panel assembly according to claim 7, wherein the thickness t of the optic adhesive (18) between the rectangular prism (17) and the second glass panel lower face (14) varies between a minimum value and a maximum value measured between points L and R.

9. Glass panel assembly according to claim 8, wherein adjacent rectangular prisms (17) are laterally optically interconnected by means of the optic adhesive (18).

10. Glass panel assembly according to claim 6, wherein the second glass panel lower face (14) is free of surface treatments in the area where the multitude of rectangular prisms (17) are connected to the lower face (14).

11. Glass panel assembly according to claim 1, wherein the length L of the rectangular prism (17) lies in a range of 20 mm to 100 mm.

12. Glass panel assembly according to claim 11, wherein the width W of the rectangular prism (17) lies in a range of 10 mm to 20 mm.

13. Glass panel assembly according to claim 12, wherein the height H of the rectangular prism (17) lies in the range of 1,6 mm and 2, 5 mm.

14. Glass panel assembly according to claim 1, wherein a PCB strip (31) carrying a multitude of light sources (16) extends along a light receiving edge of the multitude of rectangular prisms (17) and wherein the PCB strip (31) is either connected to the lower face (14) of the second glass panel (12) or is connected to a cover element (22) which covers the light in coupling assembly (7, 8).

15. Glass panel assembly according to claim 13, wherein distance D is the distance between each neighboring light source (16) which distance lies in a range of 10 mm to 50 mm.
